# EUROPEAN PATENT APPLICATION

(11) **EP 4 674 990 A1**
(43) Date of publication of application: **07.01.2026**
(21) Application number: 24186598.9
(22) Date of filing: 04.07.2024
(51) Int. Cl.: C22B 1/00, C22B 3/08, C22B 3/44, C22B 5/00, C22B 7/00, C22B 26/10, C22B 26/12, H01M 10/54

(54) **SAFE HYDROMETALLURGICAL METHOD OF RECOVERING ALKALI METALS FROM MATERIALS INCLUDING FREE ALKALI ELEMENTS**

(71) Applicant: Technische Universität Clausthal, 38678 Clausthal-Zellerfeld (DE)
(72) Inventor: Yagmurlu, Bengi, 38678 Clausthal-Zellerfeld (DE); Schneider, Kirstin, 38678 Clausthal-Zellerfeld (DE)
(74) Representative: REHBERG HÜPPE + PARTNER

(57) **Abstract**

In a method (1) of recovering an alkali metal from a material (2) including the alkali metal as a free alkali element, the material (2) is contacted with an aqueous solution (3) such as to convert the free alkali element into an alkali salt dissolved in the aqueous solution (3). The aqueous solution (3) with the alkali salt dissolved therein is separated from solid remainders of the material (2); and the separated aqueous solution (3) is hydrometallurgically processed to recover the alkali metal. In order to reduce an emission of hydrogen from the aqueous solution (3) contacting the material (2), a metal salt of a more noble metal that is higher in the galvanic series than the alkali metal is added to the aqueous solution (3).

## Description

### TECHNICAL FIELD OF THE INVENTION

The present invention relates to a hydrometallurgical method of recovering an alkali metal from a material including the alkali metal as a free alkali element. More particularly, the present invention relates to such a method comprising the steps of contacting the material with an aqueous solution such as to convert the free alkali element into an alkali salt dissolved in the aqueous solution; separating the aqueous solution with the alkali salt dissolved therein from solid remainders of the material; and processing the separated aqueous solution to recover the alkali metal.

The growing ubiquity of lithium-ion batteries (LIBs) in diverse applications emphasizes the pressing need for efficient recycling methodologies to mitigate the environmental impacts and exploit the inherent economic values of LIBs. Once LIBs are extracted from products such as electric vehicles, a variety of technologies, including pyrometallurgy, hydrometallurgy, mechanical processing, thermal processing, and direct recycling, are employed individually or in combination to enable LIB recycling.

The advent of solid-state batteries (SSBs) marks a new era in battery technology, promising even greater performance and safety by replacing the liquid organic electrolyte with a solid electrolyte. Furthermore, the adoption of solid electrolytes enables the use of alkali metal anodes such as Li and Na, leading to even higher energy densities. While the prospect of SSBs offers immense potential, their cell components pose new hurdles for current recycling technologies, particularly in hydrometallurgical contexts where the presence of alkali metals in a wet environment can pose substantial safety hazards. When an alkali metal X is exposed to water, it reacts violently to form an aqueous hydroxide XOH and hydrogen gas is produced: 2 *X* (*s*)+*H*₂*O* (*l*)→2 *XOH* (*aq*)+*H*₂ (*g*)*.* This reaction is exothermic and extremely hard to control in an industrial operation.

### PRIOR ART

Harper, G. et al. Recycling lithium-ion batteries from electric vehicles. Nature 575, 75-86 355 (2019) describe a long and complex process chain with interdependent process steps for recycling conventional LIBs.

The applied processes can be divided into pre-treatment, pyrometallurgy, mechanical processing, and hydrometallurgy, see also Doose, S., Mayer, J. K., Michalowski, P. & Kwade, A. Challenges in Ecofriendly Battery Recycling and Closed Material Cycles: A Perspective on Future Lithium Battery Generations. Metals 11,291 (2021).

Pre-treatment often involves deactivation via thermal methods or short circuiting the cell to reduce electrical, thermal and chemical hazards, see Mikita, R., Suzumura, A. & Kondo, H. Battery deactivation with redox shuttles for safe and efficient recycling. Sci. Rep. 14, 3448 (2024).

After deactivation, disassembly to module, cell or even electrode level takes place. Pyrometallurgy uses high temperatures (up to 1500 °C) and a reducing atmosphere to melt the battery components and produce an alloy containing valuable elements such as nickel, copper, and cobalt, see Brückner, L., Frank, J. & Elwert, T. Industrial Recycling of Lithium-Ion Batteries-A Critical Review of Metallurgical Process Routes. Metals 10, 1107 (2020).

Mechanical processing is used to liberate and separate the LIB into its components and to concentrate the valuable material fractions in a so-called black mass, which mainly consists of active cathode and anode materials, see Diekmann, J. et al. Ecological Recycling of Lithium-Ion Batteries from Electric Vehicles with Focus on Mechanical Processes. J. Electrochem. Soc. 164, A6184-A6191 (2017)., and Sommerville, R., Shaw-Stewart, J., Goodship, V., Rowson, N. & Kendrick, E. A review of physical processes used in the safe recycling of lithium ion batteries. Sustain. Mater. 367 Technol. 25, e00197 (2020).

Hydrometallurgy recovers the valuable materials from the alloy or black mass and produces metal salts, which can be reused as secondary materials in the synthesis of active materials, see Larouche, F. et al. Progress and Status of Hydrometallurgical and Direct Recycling of Li-lon Batteries and Beyond. Materials 13, 801 (2020).

An alternative approach is the direct recycling of the anode and cathode active materials, where the recycling does not take place at a molecular level, but at a material level (e.g. by thermal or hydrothermal processes), resulting in regenerated active materials, see Wang, T. et al. Direct Recycling of Spent NCM Cathodes through lonothermal Lithiation. Adv. Energy Mater. 10, 2001204 (2020).

Even though direct recycling is of high interest for research, most industrial LIB recycling processes focus on a combination of mechanical processing, pyrometallurgy, and hydrometallurgy, see Brückner, L., Frank, J. & Elwert, T. (2020).

Very little is known about the recyclability of polymer-based SSBs due to their novelty and varying structure compared to LIBs, and the investigations are often limited to individual components of the polymer SSB such as the polymer SE, see Ahuis, M. et al. Recycling of solid-state batteries. Nat. Energy 9, 373-385 (2024).

A promising approach for recycling polymer SE is the introduction of functional groups that make the polymer selectively degradable by thermal or solvent-based methods, allowing the potential separation of the valuable conductive salt and re-polymerization of the polymer, see Hong, M. & Chen, E. Y.-X. Chemically recyclable polymers: a circular economy approach 374 to sustainability. Green Chem. 19, 3692-3706 (2017).

By incorporating SnF₂ or SnF₂-LiPF₆, see Li, W. et al. Thermally Depolymerizable Polyether Electrolytes for Convenient and Low-Cost Recycling of LiTFSI. Angew. Chem. 134, e202209169 (2022), or dynamic vinylogous urethane, see Lin, Y. et al. Reprocessable and Recyclable Polymer Network Electrolytes via Incorporation of Dynamic Covalent Bonds. Chem. Mater. 34, 2393-2399 (2022), into the PEO network, the recyclability of the polymer and thus the recovery of the conducting salt (e.g. LiTFSI or LIFSI) can be achieved.

Another interesting approach in the field of polymer SSB recycling is the integration of Mn₂Phytate from spent LiMn₂O₄ batteries into the PEO/LiTFSI SE mixture to increase the ionic conductivity and thus the performance, see Wang, Y., Diao, W., Fan, C., Wu, X. & Zhang, J. Benign Recycling of Spent Batteries towards All-Solid-State Lithium Batteries. Chem. - Eur. J. 25, 8975-8981 (2019).

However, it remains unclear to what extent these considerations can be transferred to the recycling of polymer SSB full-cells with higher material complexity and how this complexity influences the recycling processes. In particular, it is necessary to consider how the various pre-treatment and mechanical recycling processes, which have not yet been investigated, influence the recycling of SSBs and the cathode active materials. Challenges specific to SSB, such as the recycling of Li metal anodes and the possible formation of hydrogen in hydrometallurgical processes, need to be addressed early in technology development to enable an efficient design for recycling.

US 10 648 063 B2 discloses a chemical dissolution method for use in recycling rare earth metal-containing material such as permanent magnet material including end-of-life magnet shapes, magnet scrap and Terfenol-D alloy material. The method comprises mixing the rare earth metal-containing material and an aqueous solution of a copper (II) salt to dissolve the material in the solution. The dissolved rare earth metal is then precipitated from the aqueous solution as a rare earth metal compound, such as a rare earth metal oxalate, sulfate or phosphate from which rare earth metal oxide can be obtained.

### OBJECT OF THE INVENTION

It is the object of the present invention to provide a reliable, safe and efficient hydrometallurgical recycling process for batteries or other materials containing alkali metals. To date, no reliable hydrometallurgical recycling process for processing this material is available.

### SOLUTION

According to the present invention, the object of the invention is solved by a hydrometallurgical method of recovering an alkali metal from a material including the alkali metal as a free alkali element according to independent claim 1.

Preferred embodiments of the method according to the invention are defined in the dependent claims.

### DESCRIPTION OF THE INVENTION

In a hydrometallurgical method of recovering an alkali metal from a material including the alkali metal as a free alkali element according to the present invention, the method comprising the step of contacting the material with an aqueous solution such as to convert the free alkali element into an alkali salt dissolved in the aqueous solution, the step of separating the aqueous solution with the alkali salt dissolved therein from solid remainders of the material, and the step of processing the separated aqueous solution to recover the alkali metal, a metal salt of a more noble metal that is higher in the galvanic series than hydrogen is added to the aqueous solution before and/or in the step of contacting. The criterion that the more noble metal is higher in the galvanic series than hydrogen includes that the more noble metal is higher in the galvanic series than the alkali metal, because all alkali metals have a negative standard electrode potential against a standard hydrogen electrode.

The present hydrometallurgical method is a salt-leaching approach utilizing the principles of cementation but in an unusual way. Cementation is a well-known process used to precipitate a dissolved metal A by adding another less noble metal B: *M_{A}*^{*n*⁺} (*aq*)+*M*₂ (*s*)→*M*₁ (*s*)+*M_{B}*^{*n*⁺} (*aq*)*.* The thermodynamic principle behind this reaction is the relative position of the two metals in the table of standard electrode potentials or the galvanic series. Copper cementation with less noble scrap iron is a commonly used process in the industry to recover copper.

Unlike conventional cementation processes that aim to recover a metal that is dissolved at the beginning as a free metal, the salt-leaching approach of the present hydrometallurgical method prioritizes the controlled dissolution of alkali metals to mitigate the safety hazards that would otherwise exist due to extensive hydrogen formation. The present hydrometallurgical method involves immersing the material including the alkali metal as a free alkali element in a metal salt solution in which the metal cations are more electropositive than hydrogen cations, i. e. H⁺. Thus, the alkali element is dissolved, and the more noble metal is cemented as a free element. The following reactions illustrate the process for Li and Na metal using Cu(ll) sulfate as an example metal salt solution: 2 *Li* (*s*)+*Cu*²⁺(*aq*)→2 *Li*⁺ (*aq*)+*Cu* (*s*), and 2 *Na* (*s*)+*Cu*²⁺(*aq*)→2 *Na*⁺ (*aq*)+*Cu* (s).

The alkali metal recovered in the present hydrometallurgical method may be selected from lithium, sodium, potassium and combinations thereof. In many applications of the methods, the alkali metal will be lithium.

The more noble metal may be selected from more noble metals which, in the aqueous solution, a positive standard electrode potential against a standard hydrogen electrode of at least 0.1 V, preferably of at least 0.15 V to 0.25 V. The aqueous solution used has an influence on the positions of the more noble metal and the alkali metal in the galvanic series.

Particularly, the more noble metal may be copper, and even more particularly, the metal salt may be a copper sulfate. The standard electrode potential of copper (Cu) in Cu²⁺ + e⁻ Cu⁺ is +0,161 V. In Cu²⁺ + 2e⁻ 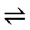 Cu it is +0,339 V, and in Cu⁺ + e⁻ 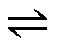 Cu it is even +0,518 V. Cemented copper produced in the present metallurgical method may be easily regenerated by, for example, providing an oxidizing agent in an acidic aqueous solution.

For most effectively suppressing the generation of hydrogen in the present metallurgical method, the metal salt should be added in an at least stochiometric amount with regard to all alkali metal that is included in the material as a free alkali element being converted to alkali salt. A much higher than stochiometric amount of the metal salt provides no or little additional benefit. Thus, the metal salt is usually not added in more than 2.5 times the stochiometric amount.

Preferably, the aqueous solution is an acidic aqueous solution. The acidity of the aqueous solution enhances the yield of alkali metal recovered by the present hydrometallurgical method. By means of a high acidity of the aqueous solution, a yield of more than 95 %, i.e. close to 100 %, with regard to the alkali metal included in the material may be obtained.

An initial pH of the aqueous solution when first contacting the material may be in a range from pH 0.1 to pH 4.0, preferably in a range from pH 0.1 to pH 1.0 Further, the aqueous solution may be held at a constant pH during contacting the material, i.e. in the range from pH 0.1 to pH 4.0 and preferably in the range from pH 0.1 to pH 1.0, during contacting the material until all alkali metal is leached from the material. At a pH below 4.0 no cemented copper will be precipitated from the aqueous solution.

If an oxidizing agent, preferably O₂ or O₃, is added to the aqueous solution during and/or after contacting the material, the cemented more noble metal may be dissolved again, and, thus, the metal salt will be regenerated. This particularly applied if the aqueous solution is a strong acidic solution.

A hydrostatic pressure of the aqueous solution during contacting the material may be in a range from 0.5×10⁵ Pa to 10×10⁵ Pa and preferably in a range from 1×10⁵ Pa to 5×10⁵ Pa, i.e. about standard pressure or a mild overpressure.

The temperature of the material and the aqueous solution contacting the material may be in a range from 0°C to 100°C. Preferably it will be in a range from 20°C to 60°C. The reactions occurring in the present hydrometallurgical method are exothermic. Thus, the temperature of the aqueous solution and the material contained therein will increase. However, the temperature should be kept clearly below the boiling point of the aqueous solution at the respective hydrostatic pressure. The temperature may also be used for thermally controlling the speed of the reactions occurring in the aqueous solution, inclusive of the generation of hydrogen.

Typically, the material will be contacted with the aqueous solution for a period of time in a time range from 1 min to 200 min, preferably from 5 min to 30 min, in order to recover substantially all of the alkali metal included in the material. Alternatively or additionally, the material may be contacted with the aqueous solution until a rate of change of an unstabilized pH of the aqueous solution, i.e. the pH of the aqueous solution not being held constat by adding an acid, has dropped below a threshold value because the alkali metal has been leached completely. For example, it may be waited until the unstabilized pH of the aqueous solution displays no change, particularly no increase, for a period of time in a typical range from 1 to 15 minutes. Further, although the hydrogen emission is strongly reduced in the present hydrometallurgical method as compared to other hydrometallurgical methods, it somehow indicates the amount of alkali metal that is still included in the material as a free alkali element and transferred into an alkali salt. Thus, waiting for an end of the hydrogen emission will also ensure that substantially all alkali metal has been leached from the material.

Prior to being contacted with the aqueous solution or even within the aqueous solution, the material may be shredded or comminuted to ease the leaching of the alkali metal from the material. More particularly, the material may be shredded to a maximum particle size of less than 100 mm, preferably to a maximum particle size of less than 10 mm, to achieve this purpose.

Further, the material may, prior to being contacted with the aqueous solution and, preferably, after being shredded, be exposed to an oxygen containing gas atmosphere. This oxygen containing gas atmosphere may have a temperature raised above ambient temperature, or its temperature may be increased above ambient temperature due to exothermic reactions of the oxygen with the material and particularly with the alkali metal included in the material. However, it has to be ensured, that the temperature of the gas atmosphere is kept below an ignition temperature at which pyrolytic reactions of the materials would start. The oxygen containing gas atmosphere may be ambient air or a gas atmosphere having a by at least 2 % or even by at least 5 % by total volume higher O₂ content and/or O₃ content than ambient air.

In practical embodiments of the present hydrometallurgical method, the material from which the alkali metal is recovered may consist of parts of solid-state batteries (SSBs) and/or Lithium-Ion-batteries (LIBs). Most particularly, the material may consist of parts of solid state Lithium-Ion-batteries.

The present hydrometallurgical method offers significant advantages in SSBs and LIBs recycling, particularly in terms of safety, selective recovery, cost-effectiveness, and scalability.

By a controlled dissolution of the alkali metal anode, the process effectively reduces hydrogen formation, thereby mitigating the risk of explosive atmospheres. This ensures that metallic anodes contained in SSBs can be safely handled within a hydrometallurgical recycling process, enhancing overall operational safety.

The present hydrometallurgical method enables the selective dissolution of alkali metals, such as Li and Na, enabling an early-stage recovery of high-quality products.

Salt leaching is a cost-efficient solution for SSB recycling. The utilization of a Copper salt solution enables the direct recycling of cemented Copper by means of adding acid and oxygen/air, thereby promoting sustainability and cost reduction.

The scalability and adaptability of the salt leaching process renders it suitable for diverse battery types containing alkali metal anodes. This inherent scalability ensures broad applicability, accommodating the evolving landscape of battery technologies and recycling requirements.

Advantageous developments of the invention result from the claims, the description and the drawings.

The advantages of features and of combinations of a plurality of features mentioned at the beginning of the description only serve as examples and may be used alternatively or cumulatively without the necessity of embodiments according to the invention having to obtain these advantages.

The following applies with respect to the disclosure - not the scope of protection - of the original application and the patent: Further features may be taken from the drawings, in particular from the illustrated designs and the dimensions of a plurality of components with respect to one another as well as from their relative arrangement and their operative connection. The combination of features of different embodiments of the invention or of features of different claims independent of the chosen references of the claims is also possible, and it is motivated herewith. This also relates to features which are illustrated in separate drawings, or which are mentioned when describing them. These features may also be combined with features of different claims. Furthermore, it is possible that further embodiments of the invention do not have the features mentioned in the claims which, however, does not apply to the independent claims of the granted patent.

The number of the features mentioned in the claims and in the description is to be understood to cover this exact number and a greater number than the mentioned number without having to explicitly use the adverb "at least". For example, if a more noble metal is mentioned, this is to be understood such that there is exactly one more noble metal or there are two more noble metals or more more noble metals. Additional features may be added to these features, or these features may be the only features of the respective product.

The reference signs contained in the claims are not limiting the extent of the matter protected by the claims. Their sole function is to make the claims easier to understand.

### BRIEF DESCRIPTION OF THE DRAWINGS

In the following, the invention is further explained and described with respect to preferred exemplary embodiments illustrated in the drawing.

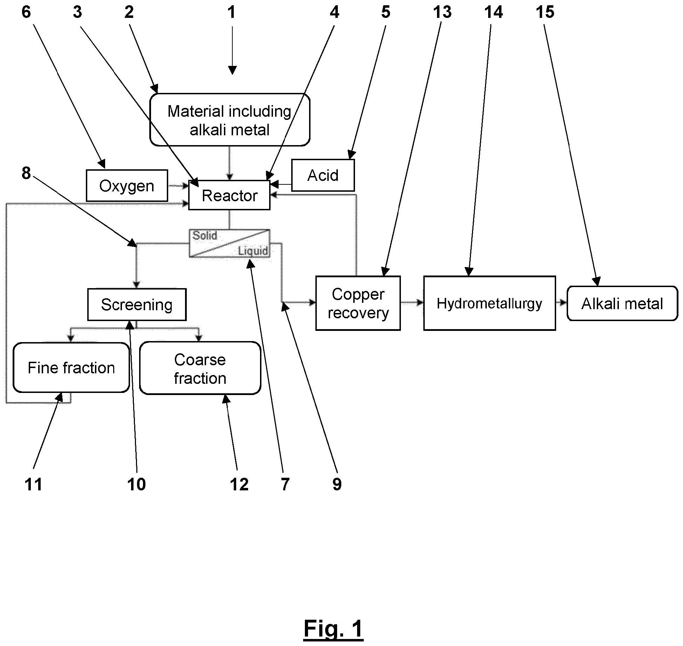

- **Fig.** 1: is a flow diagram of an embodiment of the present hydrometallurgical method.

### DESCRIPTION OF THE DRAWINGS

**Fig. 1** illustrates a flow diagram of an embodiment of the present hydrometallurgical method 1. Material 2 containing alkali metals and consisting of shredded battery production scrap and/or end-of-life batteries is added to an aqueous solution 3 of a copper salt in a chemical reactor 4. Acid 5 is added to control the pH of the aqueous solution 3. Oxygen/air 6 is added for direct recycling cemented copper back into the aqueous solution 3 of the copper salt. A salt leaching process leaching the alkali metals as alkali metal salt from the material 2 is followed by a separation 7 separating solids 8 from liquids 9 by, for example, means of filtration. The solids 8 may be further separated by screening 10 into a fine fraction 11 containing cemented copper and a coarse fraction 12 containing, among other things, current collector foils and tabs included the material 2. The fine fraction 11 may be recirculated to the cementation in the chemical reactor 4. In a copper recovery 13, copper may be recovered from the separated liquids 9 to minimize copper losses. Depending on the residual copper concentration, different hydrometallurgical processes such as solvent extraction or ion exchange may be applied in the copper recovery 13. Further hydrometallurgical processes 14 may be applied to remove impurities, separate metals, and recover metal compounds 15. The overall hydrometallurgical method 1 may be executed batch-wise or in a continuous mode.

In examples of the present hydrometallurgical method 1 and comparative examples, the material 2 consisted of lithium metal anodes calendered onto copper foils. This material 2 was immersed in water and sulfuric acid to provide the comparative examples and in different copper sulfate solutions with varying copper concentrations at different pH values to provide the examples of the present hydrometallurgical method 1. Hydrogen emissions from the aqueous solutions 3 were measured as a hydrogen concentration in parts per million (ppm) directly above the aqueous solution in a system which was open toward the atmosphere, see Table 1.

**Table 1: Hydrogen emissions from lithium metal calendered on Cu foil.**

| **Time (min)** | | | **Hydrogen emission (ppm)** | | | |
|---|---|---|---|---|---|---|
| | **H₂O** | **1 M H₂SO₄** | **Low CuSO₄** | **High CuSO₄** | **Low CuSO₄ pH 0.2** | **Low CuSO₄ pH 0.5** |
| 0.5 | | 14,000 | | | | |
| 1 | 14,000 | 900 | 2,000 | 2,000 | 1,000 | 750 |
| 2 | 10,000 | 600 | 2,000 | 2,000 | 550 | 500 |
| 4 | 3,000 | 300 | 900 | 2,000 | 300 | 400 |
| 6 | 3,000 | 200 | 1,000 | 1,000 | 250 | 250 |
| 8 | 2,000 | 90 | 700 | 1,000 | 250 | 200 |
| 10 | 1,500 | 85 | 350 | 1,550 | 250 | 200 |
| 12 | 300 | 80 | 350 | 950 | 200 | 200 |
| 14 | 250 | 25 | 200 | 1,250 | 200 | 100 |
| 16 | 250 | 0 | 15 | 800 | 100 | 95 |
| 18 | 200 | 5 | 35 | 550 | 100 | 90 |
| 20 | 150 | 0 | 15 | 550 | 95 | 9 |

The examples of the present hydrometallurgical method 1 with aqueous solutions 3 of copper sulfate demonstrate a remarkable reduction in hydrogen emission compared to the comparative examples in water and acid without copper sulfate. After exposing the lithium metal anodes to aqueous solutions 3 of copper sulfate at a low pH value for 1 minute, hydrogen emissions were reduced by 94% compared to water, underscoring the efficiency of the present hydrometallurgical method 1 in enabling safe aqueous processing of alkali metals.

Although water leaching is an environmentally sustainable and cost-effective method for extracting water-soluble components, it presents challenges in recycling polymer SSBs. These SSBs contain metallic lithium, which reacts exothermically with water, releasing hydrogen. This was evident in the comparative example using deionized water, with significant hydrogen emissions reaching 1.4 vol% after 1 minute. Lithium dissolved rapidly in 1 minute, leading to a basic pH of 12.6. The lithium leaching efficiency (of shredded polymer SSBs) was found to be 36 % after 2 hours. Although selective lithium leaching with water is successful, the approach is impractical for large-scale applications due to the exothermic dissolution of metallic lithium and the proximity of the initial hydrogen emission to the 4 vol% lower flammability limit of hydrogen in air, which would necessitate extensive safety measures. Further, the lithium leaching efficiency is limited.

Numerous recycling studies of conventional LIB containing liquid electrolytes have employed sulfuric acid to either completely dissolve or selectively extract lithium by adding an oxidant. Similarly to the observations with water, a vigorous reaction between metallic lithium and 1 M sulfuric acid was observed. This reaction resulted in substantial hydrogen emissions of 1.4 vol% after 30 seconds and rapid lithium dissolution in 2 minutes. A high lithium leaching efficiency (of shredded polymer SSBs) of 94 % was achieved within 15 minutes. The rapid and exothermic reaction of metallic lithium with sulfuric acid and the associated hydrogen release necessitate extensive safety measures.

The present hydrometallurgical method 1 addresses the issue of hydrogen emissions in hydrometallurgical processes involving alkali metals such as lithium which are present as a free alkali element by utilizing cementation. Cementation is an electrochemical process in which electrons are transferred from a less noble metal to a dissolved more noble metal. This process reduces the dissolved more noble metal to its free metallic state while the less noble metal dissolves. Unlike traditional cementation, which aims to recover the noble metal, the present hydrometallurgical method focuses on controlled dissolution of the less noble alkali metal to reduce safety risks. In this approach, the material including the alkali metal is immersed in the aqueous solution 3 containing a metal salt that is more electropositive than the alkali metal and the hydrogen. For example, copper(II) sulfate can be used. Using copper(II) sulfate is particularly beneficial because direct recycling of the cemented Cu by adding sulfuric acid and oxygen is possible, promoting a sustainable and cost-effective recycling strategy. The general reaction is as follows: 2 *Li(s)* + *Cu*^{*2*+}(*aq*) → *2 Li*⁺(*aq*) + *Cu(s).*

In further examples of the present hydrometallurgical method 1, salt leaching with low and high copper(II) concentrations, corresponding to a stoichiometric Cu/Li molar ratio and to about two times the stoichiometric Cu/Li molar ratio, were applied. For both copper(II) concentrations, hydrogen emissions were notably reduced by 86 % as compared to leaching with deionized water and sulfuric acid. Additionally, a slower lithium dissolution rate was observed, suggesting a more controlled reaction. A pH of 5.9 was attained at low copper(II) concentration, enabling selective lithium leaching. However, regardless of the copper(II) concentration, copper cementation was superimposed by precipitation of copper sulfate hydroxide. To realize copper cementation only, maintaining an acidic pH is crucial and achievable by adding an acid. An example of the present hydrometallurgical method 1 at the low copper(II) concentration and with controlling the pH at 0.5 using sulfuric acid demonstrated this. Under these acidic conditions, the lowest hydrogen emission after 1 minute of 0.08 vol% was recorded, which corresponds to a reduction of the hydrogen emission by 91 % as compared to leaching with deionized water and sulfuric acid. Further, a high leaching efficiencies for lithium of more than 96 % was achieved.

Further, exposing the material including the alkali metal to ambient air for 24 hours before leaching further reduces the hydrogen emission as free metallic lithium reacts with atmospheric moisture to form lithium carbonate.

In conclusion, the present hydrometallurgical method 1 provides an innovative solution to the challenge of recycling SSBs and LIBs containing alkali metals. By applying the principles of salt leaching, it offers a safe, sustainable, and reproducible approach to hydrometallurgical recycling, paving the way for the responsible management of emerging battery technologies.

### LIST OF REFERENCE NUMERALS

- 1: hydrometallurgical method
- 2: material
- 3: aqueous solution
- 4: chemical reactor
- 5: acid
- 6: oxygen/air
- 7: separation
- 8: solids
- 9: liquids
- 10: screening
- 11: fine fraction
- 12: coarse fraction
- 13: copper recovery
- 14: hydrometallurgical processes
- 15: metal compounds

## Claims

1. A hydrometallurgical method (1) of recovering an alkali metal from a material (2) including the alkali metal as a free alkali element, the hydrometallurgical method (1) comprising
- contacting the material (2) with an aqueous solution (3) such as to convert the free alkali element into an alkali salt dissolved in the aqueous solution (3);
- separating the aqueous solution (3) with the alkali salt dissolved therein from solid remainders of the material (2); and
- processing the separated aqueous solution (3) to recover the alkali metal; **characterized by** adding a metal salt of a more noble metal that is higher in the galvanic series than hydrogen to the aqueous solution (3) before and/or in the step of contacting.

2. The method (1) of claim 1, **wherein** the alkali metal is selected from lithium, sodium, potassium and combinations thereof, wherein, preferably, the alkali metal is lithium.

3. The method (1) of claim 1 or 2, **wherein** the more noble metal, in the aqueous solution (3), has a positive standard electrode potential against a standard hydrogen electrode of at least 0.1 V, preferably of at least 0.15 V.

4. The method (1) of any of the preceding claims, **wherein** the more noble metal is copper, wherein, preferably, the metal salt is copper sulfate.

5. The method (1) of any of the preceding claims, **wherein** the metal salt is added in an at least stoichiometric amount with regard to all alkali metal, which is included in the material (2) as a free alkali element, being converted to alkali salt, wherein, optionally, the metal salt is added in not more than 2.5 times the stoichiometric amount.

6. The method (1) of any of the preceding claims, **wherein** the aqueous solution (3) is an acidic aqueous solution (3).

7. The method (1) of claim 6, **wherein** an initial pH of the aqueous solution (3) when first contacting the material (2) is in a range from pH 0.1 to pH 4.0, preferably in a range from pH 0.1 to pH 1.0.

8. The method (1) of claim 7, **wherein** the aqueous solution (3) during contacting the material (2) is held at a constant pH in the range from pH 0.1 to pH 4.0, preferably in the range from pH 0.1 to pH 1.0.

9. The method (1) of claim 8, **wherein** an acid, preferably sulfuric acid, is added to the aqueous solution (3) during contacting the material (2).

10. The method (1) of any of the preceding claims, **wherein** oxidizing agent, preferably O₂ or O₃, is added to the aqueous solution (3) during and/or after contacting the material (2).

11. The method (1) of any of the preceding claims,
- **wherein** a hydrostatic pressure of the aqueous solution (3) during contacting the material (2) is in a range from 0.5×10⁵ Pa to 10×10⁵ Pa, preferably in a range from 1×10⁵ Pa to 5×10⁵ Pa; and/or
- **wherein** a temperature of the material (2) and the aqueous solution (3) contacting the material (2) is in a range from 0 °C to 100 °C, preferably in a range from 20 °C to 60 °C.

12. The method (1) of any of the preceding claims,
- **wherein** the material (2) is contacted with the aqueous solution (3) for a period of time in a time range from 1 min to 200 min, preferably from 5 min to 30 min, and/or
- **wherein** the material (2) its contacted with the aqueous solution (3) until a rate of change of an unstabilized pH of the aqueous solution has dropped below a threshold value.

13. The method (1) of any of the preceding claims, **wherein** the material (2), prior to being contacted with the aqueous solution (3) and/or in the aqueous solution (3), is shredded to a maximum particle size of less than 100 mm, preferably to a maximum particle size of less than 10 mm.

14. The method (1) of any of the preceding claims, **wherein** the material (2), prior to being contacted with the aqueous solution (3) and, preferably, after being shredded, is exposed to an oxygen containing gas atmosphere, preferably to ambient air or a gas atmosphere having a by at least 2 % or 5 % by total volume higher O₂ content and/or O₃ content than ambient air.

15. The method (1) of any of the preceding claims, **wherein** the material (2) consists of parts of solid state batteries (SSBs) and/or lithium ion batteries (LIBs).

## Amended claims

### Amended claims in accordance with Rule 137(2) EPC.

**1.** A hydrometallurgical method (1) of recovering an alkali metal from a material (2) including the alkali metal as a free alkali element, the hydrometallurgical method (1) comprising
- contacting the material (2) with an aqueous solution (3) such as to convert the free alkali element into an alkali salt dissolved in the aqueous solution (3);
- separating the aqueous solution (3) with the alkali salt dissolved therein from solid remainders of the material (2); and
- processing the separated aqueous solution (3) to recover the alkali metal; **characterized by** adding a metal salt of a more noble metal that is higher in the galvanic series than hydrogen to the aqueous solution (3) before and/or in the step of contacting, wherein the metal salt is added in an at least stoichiometric amount with regard to all alkali metal, which is included in the material (2) as a free alkali element, being converted to alkali salt.

**2.** The method (1) of claim 1, **wherein** the alkali metal is selected from lithium, sodium, potassium and combinations thereof, wherein, preferably, the alkali metal is lithium.

**3.** The method (1) of claim 1 or 2, **wherein** the more noble metal, in the aqueous solution (3), has a positive standard electrode potential against a standard hydrogen electrode of at least 0.1 V, preferably of at least 0.15 V.

**4.** The method (1) of any of the preceding claims, **wherein** the more noble metal is copper, wherein, preferably, the metal salt is copper sulfate.

**5.** The method (1) of any of the preceding claims, **wherein** the metal salt is added in not more than 2.5 times the stoichiometric amount.

**6.** The method (1) of any of the preceding claims, **wherein** the aqueous solution (3) is an acidic aqueous solution (3).

**7.** The method (1) of claim 6, **wherein** an initial pH of the aqueous solution (3) when first contacting the material (2) is in a range from pH 0.1 to pH 4.0, preferably in a range from pH 0.1 to pH 1.0.

**8.** The method (1) of claim 7, **wherein** the aqueous solution (3) during contacting the material (2) is held at a constant pH in the range from pH 0.1 to pH 4.0, preferably in the range from pH 0.1 to pH 1.0.

**9.** The method (1) of claim 8, **wherein** an acid, preferably sulfuric acid, is added to the aqueous solution (3) during contacting the material (2).

**10.** The method (1) of any of the preceding claims, **wherein** oxidizing agent, preferably O₂ or O₃, is added to the aqueous solution (3) during and/or after contacting the material (2).

**11.** The method (1) of any of the preceding claims,
- **wherein** a hydrostatic pressure of the aqueous solution (3) during contacting the material (2) is in a range from 0.5x10⁵ Pa to 10x10⁵ Pa, preferably in a range from 1x10⁵ Pa to 5x10⁵ Pa; and/or
- **wherein** a temperature of the material (2) and the aqueous solution (3) contacting the material (2) is in a range from 0 °C to 100 °C, preferably in a range from 20 °C to 60 °C.

**12.** The method (1) of any of the preceding claims,
- **wherein** the material (2) is contacted with the aqueous solution (3) for a period of time in a time range from 1 min to 200 min, preferably from 5 min to 30 min, and/or
- **wherein** the material (2) its contacted with the aqueous solution (3) until a rate of change of an unstabilized pH of the aqueous solution has dropped below a threshold value.

**13.** The method (1) of any of the preceding claims, **wherein** the material (2), prior to being contacted with the aqueous solution (3) and/or in the aqueous solution (3), is shredded to a maximum particle size of less than 100 mm, preferably to a maximum particle size of less than 10 mm.

**14.** The method (1) of any of the preceding claims, **wherein** the material (2), prior to being contacted with the aqueous solution (3) and, preferably, after being shredded, is exposed to an oxygen containing gas atmosphere, preferably to ambient air or a gas atmosphere having a by at least 2 % or 5 % by total volume higher O₂ content and/or O₃ content than ambient air.

**15.** The method (1) of any of the preceding claims, **wherein** the material (2) consists of parts of solid state batteries (SSBs) and/or lithium ion batteries (LIBs).

**1.** A hydrometallurgical method (1) of recovering an alkali metal from a material (2) including the alkali metal as a free alkali element, the hydrometallurgical method (1) comprising
- contacting the material (2) with an aqueous solution (3) such as to convert the free alkali element into an alkali salt dissolved in the aqueous solution (3);
- separating the aqueous solution (3) with the alkali salt dissolved therein from solid remainders of the material (2); and
- processing the separated aqueous solution (3) to recover the alkali metal;
wherein the alkali metal is selected from lithium, sodium, potassium and combinations thereof; **characterized by** adding a metal salt of a more noble metal that is higher in the galvanic series than hydrogen to the aqueous solution (3) before and/or in the step of contacting, wherein the metal salt is added in an at least stoichiometric amount with regard to all alkali metal, which is included in the material (2) as a free alkali element, being converted to alkali salt.

**2.** The method (1) of claim 1, **wherein** the alkali metal is lithium.

**3.** The method (1) of claim 1 or 2, **wherein** the more noble metal, in the aqueous solution (3), has a positive standard electrode potential against a standard hydrogen electrode of at least 0.1 V, preferably of at least 0.15 V.

**4.** The method (1) of any of the preceding claims, **wherein** the more noble metal is copper, wherein, preferably, the metal salt is copper sulfate.

**5.** The method (1) of any of the preceding claims, **wherein** the metal salt is added in not more than 2.5 times the stoichiometric amount.

**6.** The method (1) of any of the preceding claims, **wherein** the aqueous solution (3) is an acidic aqueous solution (3).

**7.** The method (1) of claim 6, **wherein** an initial pH of the aqueous solution (3) when first contacting the material (2) is in a range from pH 0.1 to pH 4.0, preferably in a range from pH 0.1 to pH 1.0.

**8.** The method (1) of claim 7, **wherein** the aqueous solution (3) during contacting the material (2) is held at a constant pH in the range from pH 0.1 to pH 4.0, preferably in the range from pH 0.1 to pH 1.0.

**9.** The method (1) of claim 8, **wherein** an acid, preferably sulfuric acid, is added to the aqueous solution (3) during contacting the material (2).

**10.** The method (1) of any of the preceding claims, **wherein** oxidizing agent, preferably O₂ or O₃, is added to the aqueous solution (3) during and/or after contacting the material (2).

**11.** The method (1) of any of the preceding claims,
- **wherein** a hydrostatic pressure of the aqueous solution (3) during contacting the material (2) is in a range from 0.5x10⁵ Pa to 10x10⁵ Pa, preferably in a range from 1x10⁵ Pa to 5x10⁵ Pa; and/or
- **wherein** a temperature of the material (2) and the aqueous solution (3) contacting the material (2) is in a range from 0 °C to 100 °C, preferably in a range from 20 °C to 60 °C.

**12.** The method (1) of any of the preceding claims,
- **wherein** the material (2) is contacted with the aqueous solution (3) for a period of time in a time range from 1 min to 200 min, preferably from 5 min to 30 min, and/or
- **wherein** the material (2) its contacted with the aqueous solution (3) until a rate of change of an unstabilized pH of the aqueous solution has dropped below a threshold value.

**13.** The method (1) of any of the preceding claims, **wherein** the material (2), prior to being contacted with the aqueous solution (3) and/or in the aqueous solution (3), is shredded to a maximum particle size of less than 100 mm, preferably to a maximum particle size of less than 10 mm.

**14.** The method (1) of any of the preceding claims, **wherein** the material (2), prior to being contacted with the aqueous solution (3) and, preferably, after being shredded, is exposed to an oxygen containing gas atmosphere, preferably to ambient air or a gas atmosphere having a by at least 2 % or 5 % by total volume higher O₂ content and/or O₃ content than ambient air.

**15.** The method (1) of any of the preceding claims, **wherein** the material (2) consists of parts of solid state batteries (SSBs) and/or lithium ion batteries (LIBs).
